Europäisches Patentamt

European Patent Office

Office européen des brevets

(11) Publication number: **0 185 749**
**B1**

(12) **EUROPEAN PATENT SPECIFICATION**

(45) Date of publication of patent specification: **18.01.89** (51) Int. Cl.⁴: **H 04 B 9/00**

(21) Application number: **85903461.3**

(22) Date of filing: **20.05.85**

(86) International application number:
**PCT/US85/00943**

(87) International publication number:
**WO 85/05530 19.12.85 Gazette 85/27**

(54) **BIDIRECTIONAL OPTICAL DATA COMMUNICATIONS SYSTEM.**

(30) Priority: **06.06.84 US 618001**

(43) Date of publication of application:
**02.07.86 Bulletin 86/27**

(45) Publication of the grant of the patent:
**18.01.89 Bulletin 89/03**

(84) Designated Contracting States:
**DE FR GB**

(56) References cited:
**US-A-3 433 960**
**US-A-4 131 791**
**US-A-4 143 263**

(73) Proprietor: **NCR Corporation**
**World Headquarters**
**Dayton, Ohio 45479 (US)**

(72) Inventor: **HORST, William, R.**
**10165 Lebanón Pike**
**Dayton, OH 45459 (US)**
Inventor: **HALE, William, J.**
**1708 Dutchess Avenue**
**Dayton, OH 45420 (US)**

(74) Representative: **Robinson, Robert George**
**International Patent Department NCR Limited**
**206 Marylebone Road**
**London NW1 6LY (GB)**

EP 0 185 749 B1

## Description

Technical Field

This invention relates to optical communications systems of the kind including: a first data unit including a first data source, a first source of radiant energy coupled to said first data source and adapted to transmit modulated first radiant energy in accordance with a first stream of data from said first data source during a first mode of operation, and a first optical detector responsive to the reception of modulated second radiant energy during a second mode of operation; and a second data unit including a second optical detector responsive to the reception of said modulated first radiant energy during said first mode of operation for detecting said first stream of data, and a second data source for producing a second data stream during said second mode of operation.

Background Art

Many different separate systems, subsystems or units have been developed in the electronics field for processing and handling data. Such separate units frequently must be temporarily connected or coupled to other data processing systems or units for exchanging data therebetween. This is particularly true when one unit is portable and the other unit is fixed in position.

By optically, rather than electrically, coupling two units together the problems associated with wear and poor electrical contact are eliminated. Also, the position of one unit with respect to the other unit is far less critical with optical coupling than with electrical coupling. In addition, there is no wear or damage with repeated use.

Optical coupling is particularly advantageous for the transfer of data between the two units when the units are frequently connected and disconnected, when good alignment between units or careful physical insertion or connection cannot be guaranteed, when vibration or mechanical stress would destroy contacts, and when environmental conditions would erode conventional contacts.

An optical communications system of the kind specified is known from U.S. Patent Specification No. 3,705,986, which discloses a digital data transmission system employing pulse modulated infrared or light beams. A pair of optical transceiver units link one fixed computer system to another fixed computer system via line of sight optical communication. However, the known system has the disadvantage that, if one of the computer systems were embodied in a portable unit, the power utilized by the portable unit would unduly restrict the utilization of such portable unit.

From US-A-3 433 960 there is known an optical communication system for communicating between first and second ground stations via an orbiting relay station which is located in synchronous orbit such that it remains stationary relative to the ground stations. Each ground station includes a transmitter and receiver. To transmit from the first ground station to the second ground station, a signal generator in the transmitter of the first ground station modulates a laser beam which is directed to the orbiting relay station where the modulated beam is detected to provide signals which modulate a retrodirective modulator correspondingly. The second ground station transmits an unmodulated laser beam to the orbiting relay station, such that a modulated beam is returned to the second ground station by the retrodirective modulator. Thus, the data generated by the signal generator in the first ground station is transmitted to the second ground station via the orbiting relay station.

From US-A-4 143 263 there is known a receiver-transmitter system including a retro-reflector which reflects an incident light beam back on itself. Located between the incident light beam and the retroreflector is a modulator which may be a liquid crystal device.

Disclosure of the Invention

It is an object of the present invention to provide an optical communications system of the kind specified, suitable for utilization where one of the data units is a portable unit.

Therefore, according to the present invention, there is provided an optical communications system of the kind specified, characterized in that said first data unit includes a second source of radiant energy adapted to transmit unmodulated third radiant energy during said second mode of operation, and in that there are provided modulating means responsive to said second data stream to modulate the unmodulated third radiant energy from said first data unit in accordance with said second data stream to develop and transmit said modulated second radiant energy to said first optical detector during said second mode of operation.

It will be appreciated that in a system according to the invention, since the second unit utilizes unmodulated radiant energy provided by the energy source means in the first unit, the power consumption in the second unit is minimized, thereby enhancing the capability of the second unit as a portable unit.

Brief Description of the Drawings

Embodiments of the invention will now be described by of example with reference to the accompanying drawings, in which:—

FIG. 1 is a schematic block diagram of an optical communications system in which two data units are optically coupled together for data communications therebetween;

FIG. 2 is a schematic block diagram of an optical data communications system in accordance with a preferred embodiment of the invention;

FIG. 3 is a schematic block diagram of a second embodiment of the invention wherein two remotely positioned, optically coupled, data handling units communicate with each other in a full duplex mode of operation; and

FIG. 4 is a schematic block diagram of a third embodiment of the invention wherein two remotely positioned, optically coupled, data handling units communicate with each other in a half duplex mode of operation.

Best Mode for Carrying Out the Invention

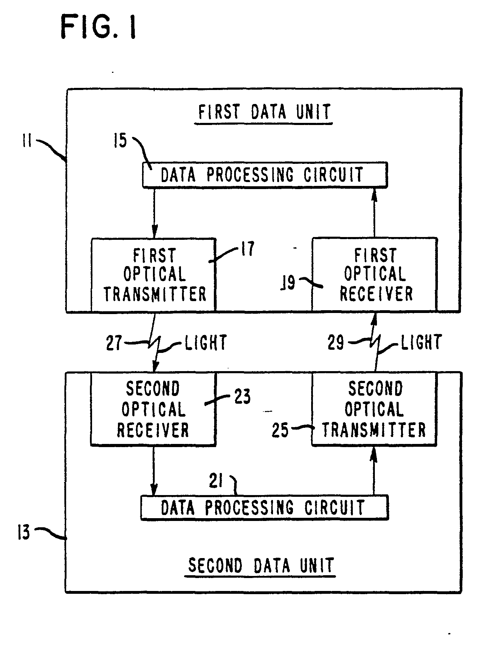

Referring now to the drawings, FIG. 1 discloses an optical data communications system in which two data handling units or data units 11 and 13 are optically coupled together for data communications therebetween.

Data unit 11 comprises a data processing circuit 15, a first optical transmitter 17 and a first optical receiver 19. Similarly, data unit 13 comprises a data processing circuit 21, a second optical receiver 23 and a second optical transmitter 25. Each of the data processing circuits 15 and 21 may include, for example, associated memory, microprocessor, keyboard and display units (not shown).

The data units 11 and 13 can both be portable or fixed in position or one unit can be portable while the other is fixed in position. When, for example, data unit 11 is portable and data unit 13 is fixed in position, data unit 13 may further include, for example, a printer (not shown) for printing data out and a modem (not shown) for enabling received data to be applied over a telephone line (not shown) to a remote location.

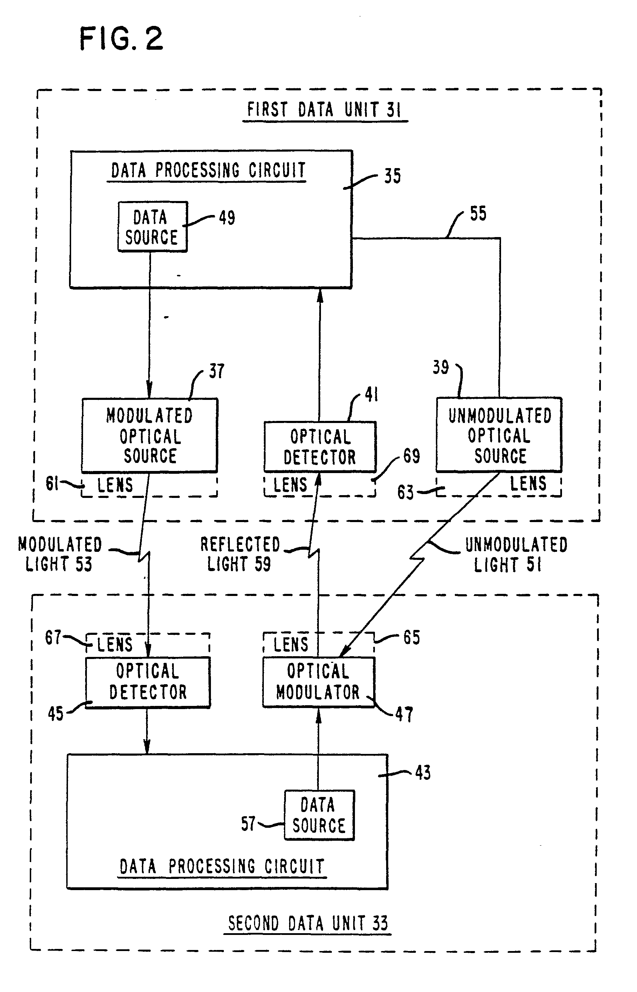

The first data unit 11, when positioned in close proximity to the second data unit 13 (e.g., perhaps as close as less than about 2 centimeters from data unit 13), optically communicates with the second data unit in both transmitting and receiving modes of operation, as indicated by the radiant energy or light symbols 27 and 29. This type of optical communications between the first and second data units 11 and 13 can provide reliable communications between the units over a relatively long period of time, as long as there is no critical power consumption restriction on either of the units. However, a problem arises when one of the units 11 and 13 is a portable compact unit which, therefore, operates only from a low power source, such as one or more low power internal batteries. Such critical parameters as portability, compactness and low power operation for one of the units 11 and 13 will severely limit the full duplex, optical communications operation of the portable unit. The optical data communications system of FIG. 2 overcomes such limitations.

FIG. 2 discloses an optical data communications system in accordance with a preferred embodiment of the invention. The system of FIG. 2 includes a first data unit 31 which is fixed in position and a second data unit 33 which is a low power or portable compact unit operating from a low power source (not shown), such as one or more low power internal batteries. Because of this low power restriction, the power consumption of the second data unit 33 must be minimized to enable the low power, second data unit 33 to provide reliable optical communications with the first data unit 31 during many uses over a substantially long period of time.

To minimize the power requirements of the second data unit 33, the first data unit 31 is designed to provide all of the optical power to enable each of the units 31 and 33 to optically communicate with the other unit in a full duplex mode of optical communications. To accomplish this objective, the first data unit 31 is implemented to include a data processing circuit 35, a modulated optical source 37, an unmodulated optical source 39 and an optical detector 41, while the second data unit 33 only includes a data processing circuit 43, an optical detector 45 and an optical modulator 47.

Data processing circuits 35 and 43 may be similar in structure and operation to the data processing circuits 15 and 21 of FIG. 1. However, a detailed description of the data processing circuits 35 and 43 is unnecessary for an understanding of the present invention.

The optical sources 37 and 39 operate as optical transmitters, while the optical detectors 41 and 45 operate as optical receivers. Optical sources and optical detectors are well known in the art. An optical source can be, for example, a light emitting diode (LED) or a gas or solid state laser. When a suitable continuous DC voltage from a power supply (not shown) is applied to the optical source 39, the optical source 39 emits a continuous unmodulated radiant energy (optical signal or light) 51. On the other hand, when the optical source 37 is pulsed or modulated on and off by a serial stream of digital data from a first data source 49, the optical source 37 transmits radiant energy pulses (optical pulses or modulated pulses) 53 representative of the modulating data from data source 49. Each of the optical detectors 41 and 45 can be, for example, any suitable type of photodetector for receiving and converting a stream of radiant energy pulses into a stream of electrical digital data pulses usable by the associated one of the data units 31 and 33.

The optical modulator 47 can simply be a liquid crystal cell or element or even a liquid crystal array. The use of a liquid crystal material to modulate a monochromatic beam of light from, for example, a gas or solid state laser, a light emitting diode or other suitable optical source is well known in the art and is taught in U.S. Patent No. 3,726,584. Essentially, a liquid crystal material can be operated to modulate a monochromatic beam of light directed thereon by changing the voltage across the liquid crystal material in accordance with a stream of data. Such voltage changes across the liquid crystal cell cause changes in the characteristics of the liquid crystal cell which, in turn, change the polarization of light so that the liquid crystal material is switched between reflective and non-reflective (absorptive) states.

In order to have optical communications between the units 31 and 33, the portable unit 33 is positioned in close proximity to and in spaced face-to-face relation with the fixed position unit 31 so that the optical detector 45 is oppositely disposed from the modulated optical source 37 and the optical modulator 47 is substantially oppositely disposed from each of the unmodulated optical source 39 and optical detector 41.

The operation of the units 31 and 33 in utilizing optical communications to input data to or to extract data from the second data unit 33 will now be discussed.

Transmitting Data From Unit 31 To Unit 33

To transmit data from the fixed first data unit 31 to the portable second data unit 33, a serial stream of digital data from a data source 49 in the data processing circuit 35 is applied to the modulated optical source or LED 37. As a result, the optical source 37 is pulsed or modulated on and off, causing the optical source 37 to transmit radiated energy pulses or modulated light 53 to the optical detector 45 in accordance with the stream of data from data source 49. The optical detector 45, which is in close proximity to the transmitting optical source 37, provides a corresponding electrical pulse to the data processing circuit 43 for each modulated light pulse 53 from the optical source 37. The electrical pulses from the optical detector 45 are shaped into digital signals and re-synchronized with a local clock (not shown) by circuitry (not shown) in the data processing circuit 43 to recover the stream of digital data that was initially generated by the data source 49. Such pulse shaping and re-synchronization (timing recovery) techniques are well known in the art and form no part of the present invention.

Transmitting Data From Unit 33 To Unit 31

The transmission of data from the portable low power second data unit 33 requires a different approach. To help the unit 33 conserve its limited power, the unit 31 furnishes the optical power to enable the unit 33 to transmit data to the unit 31. To accomplish this objective, a suitable voltage is applied from a power supply (not shown) in the data processing circuit 35 over a line 55 to the optical source 39 to enable the optical source 39 to emit continuous unmodulated radiant energy or light 51. It should be understood that the data processing circuit 35 could readily remove the voltage·on the line 55 by means of a switch (not shown) if no reception of data from the unit 33 is needed or desired.

The unmodulated light 51 from the optical source 39 in data unit 31 illuminates a surface of the optical modulator 47. To modulate this unmodulated light 51 incident on the optical modulator 47, a serial stream of digital data from a data source 57 is applied to the optical modulator 47 to change the reflectivity of the optical modulator 47 in accordance with the stream of digital data. The modulator 47 will reflect the incident unmodulated light 51 at one level of applied voltage (e.g., 0 volts) and absorb the incident unmodulated light 51 at another level of applied voltage (e.g., 5 volts). As a result, radiant energy or unmodulated light 51 from the optical source 39 is modulated by the optical modulator 47 in accordance with the stream of data from data source 49.

Modulated pulses of reflected light 59 from the optical modulator 47 in data unit 33 pass to the optical detector 41 in data unit 31. The optical detector 41 which is in close proximity to the optical modulator 47 provides a corresponding electrical pulse to the data processing circuit 35 for each modulated reflected light pulse 59 from the optical modulator 47. The electrical pulses from the optical detector 41 are shaped into digital signals and re-synchronized with a local clock (not shown) by circuitry (not shown) in the data processing circuit 35 to recover the stream of digital data that was initially generated by the data source 57. As indicated previously, such pulse shaping and re-synchronization (timing recovery) techniques are well known in the art and form no part of the present invention.

The optical data communications system of FIG. 2 may further include optical systems or lenses 61, 63, 65, 67 and 69 to collimate transmitted radiant energy or light or to focus the received radiant energy or light. More specifically, lenses 61 and 63 can be respectively aligned with the emitting areas of the optical sources 37 and 39 in data unit 31 to collimate the respective radiant energy or light signals 53 and 51. Similarly, lens 65 can be aligned with the optical modulator 47 of the data unit 33 to collimate the reflected modulated light 59. Finally, lenses 67 and 69 can be respectively aligned with the optical detector 45 in data unit 33 and the optical detector 41 in data unit 31 to respectively focus the modulated light 53 onto the optical detector 45 of data unit 33 and the reflected modulated light 59 onto the optical detector 41 of data unit 31.

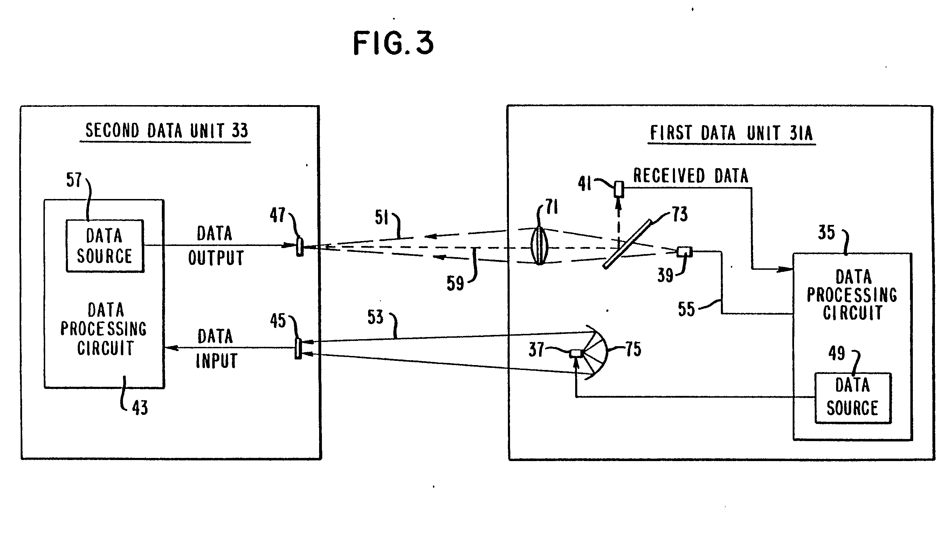

FIG. 3 discloses an optical data communications system in accordance with a second embodiment of the invention. In the first embodiment shown in FIG. 2, it was stated that the distance between the data units 31 and 33 could be very short — perhaps less than about 2 centimeters. Such a short distance between data units is not a requirement for the optical data communications system of the. invention. Therefore, the second embodiment shown in FIG. 3 approaches the other extreme, namely a relatively long communications distance between first data unit 31A and second data unit 33 of FIG. 3 that is only limited by the radiated power or energy of the associated optical sources (to be explained) employed in the embodiment of FIG. 3.

The first data unit 31A of FIG. 3 is essentially a modified version of the first data unit 31 of FIG. 2, while the second data unit 33 of FIG. 3 is the same as the second data unit 33 of FIG. 2. As a consequence of the relatively wide physical separation of the units 31A and 33, the unit 31A includes a telescope or lens system 71 (to view the surface of the optical modulator 47 in the data unit 33), a beam splitter 73 and a parabolic mirror 75, as well as the elements 35, 37, 39 and 41 of the first data unit 31 of FIG. 2.

To transmit data from data unit 31A to data unit 33, modulated radiant energy or light 53 transmitted from the modulated optical source 37 in data unit 31A is directed by the parabolic mirror 75 toward the optical detector 45 in the data unit 33 for detection and utilization of the received digital data by the data unit 33, as discussed before.

In an alternate arrangement, the parabolic mirror 75 could be replaced by an optical system, such as the lens 61 of FIG. 2, aligned with the emitting area of the optical source 37 to focus or direct the radiant energy 53 onto the surface of the optical detector 45.

In the transmission of data from the data unit 33 to data unit 31A the data unit 31A furnishes the optical power for such transmission, as discussed before. More specifically, a suitable voltage is applied from a power supply (not shown) in the data processing circuit 35 over the line 55 to the optical source 39 to enable the optical source 39 to emit continuous unmodulated radiant energy or light. As stated before, it should be understood that the data processing circuit 35 could readily remove the voltage on the line 55 by means of a switch (not shown) if no reception of data from the second data unit 33 is needed or desired.

The unmodulated radiant energy or light 51 from the unmodulated optical source 39 is partially transmitted through the beam splitter 73 and lens system 71 to the optical modulator 47. (The remaining part of unmodulated radiant energy from source 39 is either absorbed by or reflected from the beam splitter 73 and is of no consequence to the transmission of the unmodulated radiant energy 51 to the second data unit 33.) The unmodulated incident light 51 striking the surface of the optical modulator 47 is modulated by the optical modulator 47 in accordance with a stream of data from the data source 57, as discussed before. The resultant modulated pulses of reflected light 59 from the optical modulator 47 pass through the lens system 71 to the beam splitter 73. Part of this reflected modulated light 59 is reflected by the beam splitter 73 to the optical detector 41 for detection by the detector 41 and subsequent processing and utilization of the received digital data by the data processing circuit 35, as discussed before in relation to FIG. 2. The remaining part of the reflected modulated light 59 passes through the beam splitter 73 and is of no consequence to the data detected by the optical detector 41.

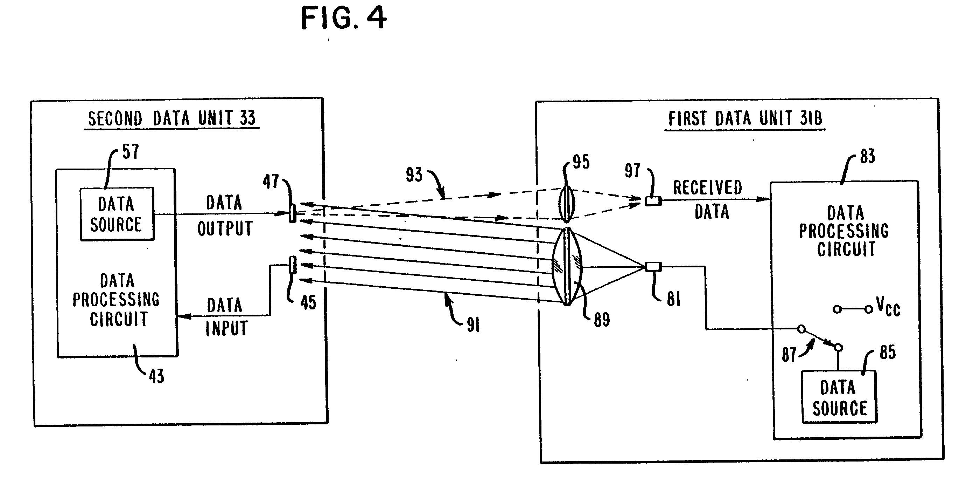

FIG. 4 discloses an optical data communications system in accordance with a third embodiment of the invention. The embodiment of FIG. 4 includes a fixed first data unit 31B and a low power second data unit 33 which is the same as the second data unit 33 of FIGS. 2 and 3. The data units 31B and 33 are separated from each other by a relatively long distance, similar to that of the data units 31A and 33 of FIG. 3. However, while the embodiment of FIG. 3, as well as the embodiment of FIG. 2, can be operated in full duplex modes of operation (i.e., simultaneous transmission and reception by either or both of the data units 31A and 33 of FIG. 3 or by either or both of the data units 31 and 33 of FIG. 2), the embodiment of FIG. 4 can only be operated in a half duplex mode of operation (i.e., only one of the two optically coupled data units 31B and 33 can transmit at any given time).

As shown in FIG. 4, there is only one optical source 81 located in the first data unit 31B. This optical source 81 may be, for example, a gas laser or a laser diode. A data processing circuit 83, which includes a data source 85 and a switching means or electronic switch 87, determines whether the system of FIG. 4 is in a transmit or a receive mode of operation.

In a transmit mode of operation, the data processing circuit 83 internally positions the switch 87 to pass a stream of digital data from the data source 85 to the optical source 81. This stream of data modulates the optical source 81 on and off, causing the optical source 81 to transmit modulated radiant energy or light. An optical system or lens system 89 is aligned with the emitting area of the optical source 81 to collimate the modulated light into a light beam 91 which is directed to front surfaces of both the optical detector 45 and the optical modulator 47 in the second data unit 33.

The optical detector 45 converts the received modulated radiant energy into an electrical data input which is utilized by the data processing circuit 43 in the data unit 33, as discussed before.

As long as the data processing circuit 43 is receiving data transmitted from the first data unit 31B, it keeps the data source 57 disabled by, for example, internally applying a disabling signal (not shown) thereto. When disabled, the data source 57 outputs a suitable signal on a data output line to cause the optical modulator 47 to absorb or not reflect that portion of the modulated light beam 91 that is striking its front surface.

When the data source 85 in the data processing circuit 83 of the first data unit 31B has completed its transmission of data, the data processing circuit 83 internally switches the position of the electronic switch 87 by means (not shown), such as a signal. The switching of the electronic switch 87 causes the system of FIG. 4 to go into the receive mode of operation. In the receive mode of operation a suitable DC voltage Vcc is applied via the switch 87 to the optical source 81. The voltage Vcc enables the optical source 81 to emit continuous unmodulated radiant energy or light, which is collimated into the light beam 91. As stated before, the light beam 91 is directed to front surfaces of both the optical detector 45 and the optical modulator 47 in the second data unit 33.

Since the light beam 91 is not modulated at this time, the optical detector 45 does not develop any data input to the data processing circuit 43. Since the data processing circuit 43 is not receiving data from the first data unit 31B, the circuit 43 enables the data source 57 by, for example, removing the disabling signal (not shown) to the data source 57. If the second data unit 33 has data to transmit, the enabled data source 57 starts outputting a stream of digital data to the optical modulator 47. As a result, the optical modulator 47 modulates or reflects the unmodulated radiant energy or light 91 from the data unit 31B in accordance with the stream of data from data source 57, as discussed before.

The resultant modulated pulses of reflected light 93 from the optical modulator 47 in data unit 33 pass through an optical system or lens system 95 to an optical detector 97 similar to the optical detector 41 of FIGS. 2 and 3. The optical detector 97 detects the data transmitted from the data unit 33 and applies this detected received data to the data processing circuit 83 for subsequent processing and utilization similar to that discussed before for the data processing circuit 35 of FIG. 2.

It should be noted at this time that the communications distance between the data units 31A and 33 of FIG. 3, or between the data units 31B and 33 of FIG. 4, is only limited by the radiated power or energy of the associated optical source or sources employed in the system. Laser light sources assist in directing radiant or light energy to the proper location and, as the cost of solid state lasers becomes lower, should become a more common means of providing the modulated light for data input as well as the optical source of illumination for an optical modulator (or liquid crystal cell or array) for data output.

The invention thus provides a system and method for establishing bidirectional optical communications between associated data units where one of the data units supplies all of the optical power needed for each data unit to transmit optical data to the other data unit.

Although the form of modulation implied by the description of the invention is amplitude (or off-on) modulation, the term "modulation" (as used in the description) is intended to also include the possible modulation of other characteristics of the optical energy or light, such as the modulation of the phase or polarization angle or the modulation of the frequency or wavelength of the optical energy or light.

## Claims

1. An optical communications system including: a first data unit (31) including a first data source (49), a first source of radiant energy (37) coupled to said first data source (49) and adapted to transmit modulated first radiartenergy (53) in accordance with a first stream of data from said first data source (49) during a first mode of operation, and a first optical detector (41) responsive to the reception of modulated second radiant energy (59) during a second mode of operation; and a second data unit (33) including a second optical detector (45) responsive to the reception of said modulated first radiant energy (53) during said first mode of operation for detecting said first stream of data, and a second data source (57) for producing a second data stream during said second mode of operation, characterized in that said first data unit includes a second source of radiant energy (39) adapted to transmit unmodulated third radiant energy (51) during said second mode of operation, and in that there are provided modulating means (47) responsive to said second data stream to modulate the unmodulated third radiant energy (51) from said first data unit (31) in accordance with said second data stream to develop and transmit said modulated second radiant energy (59) to said first optical detector (41) during said second mode of operation.

2. An optical communications system according to claim 1, characterized in that said modulating means (47) include a liquid crystal cell.

3. An optical communications system according to claim 1, characterized in that said first and second sources (37, 39) include respective light emitting diodes.

4. An optical communications system according to claim 1, characterized in that said first and second sources (37, 39) include respective laser sources.

5. An optical communications system according to claim 1, characterized by: first, second and third optical systems (61, 63, 65) aligned respectively with said first and second optical sources (37, 39) and said modulating means (47) and adapted to collimate said modulated first radiant energy, said unmodulated third radiant energy and said modulated second radiant energy (59) respectively; and fourth and fifth optical systems (69, 67) aligned respectively with said first and second optical detectors (41, 45) respectively and adapted to focus said modulated second and first radiant energy (59, 53) respectively on to said first and second optical detectors (41, 45) respectively.

## Patentansprüche

1. Ein optisches Kommunikationssystem aufweisend: eine erste Dateneinheit (31) mit einer ersten Datenquelle (49), einer ersten Strahlungsenergiequelle (37), die mit der ersten Datenquelle (49) gekoppelt und geeignet ist, modulierte erste Strahlungsenergie (53) gemäß einem ersten Datenstrom von der ersten Datenquelle (49) während einer ersten Betriebsart auszusenden, und einem ersten optischen Detektor (41), der auf den Empfang von modulierter zweiter Strahlungsenergie (59) während einer zweiten Betriebsart anspricht; und eine zweite Dateneinheit (33) mit einem zweiten optischen Detektor (45), der auf den Empfang der modulierten ersten Strahlungsenergie (53) während der ersten Betriebsart zum Detektieren des ersten Datenstroms anspricht, und einer zweiten Datenquelle (57) zum Erzeugen eines zweiten Datenstroms während der zweiten Betriebsart, dadurch gekennzeichnet, daß die erste Dateneinheit eine zweite Strahlungsenergiequelle (39) aufweist, die geeignet ist, unmodulierte dritte Strahlungsenergie (51) während der zweiten Betriebsart auszusenden, und daß Modulationsvorrichtungen (47) vorgesehen sind, die auf den zweiten Datenstrom ansprechen, um die ummodulierte dritte Strahlungsenergie (51) von der ersten Dateneinheit (31) gemäß dem zweiten Datenstrom zu modulieren, um die modulierte zweite Strahlungsenergie (59) zu entwickeln und an den ersten optischen Detektor (41) während der zweiten Betriebsart zu senden.

2. Optisches Kommunikationssystem nach Anspruch 1, dadurch gekennzeichnet, daß die Modulationsvorrichtungen (47) eine Flüssigkristallzelle aufweisen.

3. Optisches Kommunikationssystem nach Anspruch 1, dadurch gekennzeichnet, daß die erste und zweite Quelle (37, 39) entsprechende lichtemittierende Dioden aufweisen.

4. Optisches Kommunikationssystem nach Anspruch 1, dadurch gekennzeichnet, daß die erste und zweite Quelle (37, 39) entsprechende Laserquellen aufweisen.

5. Optisches Kommunikationssystem nach Anspruch 1, gekennzeichnet durch: erste zweite und dritte optische Systeme (61, 63, 65), die entsprechend mit der ersten und zweiten optischen Quelle (37, 39) und den Modulationsvorrichtungen (47) ausgerichtet und geeignet sind, die modulierte erste Strahlungsenergie, die unmodulierte dritte Strahlungsenergie bzw. die modulierte zweite Strahlungsenergie (59) zu sammeln; und vierte und fünfte optische Systeme (69, 67), die entsprechend mit dem ersten und zweiten optischen Detektor (41, 45) ausgerichtet und geeignet sind, die modulierte erste und zweite Strahlungsenergie (59, 53) entsprechend auf den ersten bzw. zweiten optischen Detektor (41, 45) zu fokussieren.

## Revendications

1. Système de transmission optique comprenant: une première unité (31) de données, comportant une première source (49) de données, une première source d'énergie rayonnante (37) couplée à ladite première source (49) de données et conçue, pour émettre une première énergie rayonnante modulée (53) conformément à un premier flux de données provenant de ladite première source (49) de données durant un premier mode de fonctionnement, et un premier détecteur optique (41) sensible à la réception d'une deuxième énergie rayonnante modulée (59) durant un second mode de fonctionnement; et une seconde unité (33) de données comprenant un second détecteur optique (45) sensible à la réception de ladite première énergie rayonnante modulée (53) durant ledit premier mode de fonctionnement et détectant ledit premier flux de données, et une seconde source (57) de données destinée à produire un second flux de données durant ledit second mode de fonctionnement, caractérisé en ce que ladite première unité de données comprend une seconde source d'énergie rayonnante (39) conçue pour émettre une troisième énergie rayonnante non modulée (51) durant ledit second mode de fonctionnement, et en ce qu'il est prévu des moyens de modulation (47) qui, en réponse audit second flux de données, modulent la troisième énergie rayonnante non modulée (51) à partir de ladite première unité (31) de données conformément audit second flux de données pour développer et transmettre ladite deuxième énergie rayonnante modulée (59) vers ledit premier détecteur optique (41) durant ledit second mode de fonctionnement.

2. Système de transmission optique selon la revendication 1, caracterisé en ce que lesdits moyens (47) de modulation comprennent une cellule à cristaux liquides.

3. Système de transmission optique selon la revendication 1, caractérisé en ce que lesdites première et seconde sources (37, 39) comprennent des diodes électroluminescentes respectives.

4. Système de transmission optique selon la revendication 1, caractérisé en ce que lesdites première et seconde sources (37, 39) comprennent des sources à laser respectives.

5. Système de transmission optique selon la revendication 1, caractérisé par: des premier, deuxième et troisième systèmes optiques (61, 63, 65) alignés respectivement avec lesdites première et seconde sources optiques (37, 39) et lesdits moyens de modulation (47), et conçus pour collimater ladite première énergie rayonnante modulée, ladite troisième énergie rayonnante non modulée et ladite deuxième énergie rayonnante modulée (59), respectivement; et des quatrième et cinquième systèmes optiques (69, 67) alignés respectivement avec lesdits premier et second détecteurs optiques (41, 45), respectivement, et conçus pour focaliser lesdites deuxième et troisième énergies rayonnantes modulées (59, 53), respectivement, sur lesdits premier et second détecteurs optiques (41, 45), respectivement.

## FIG. 1

FIRST DATA UNIT

11

15

DATA PROCESSING CIRCUIT

FIRST OPTICAL TRANSMITTER 17

FIRST OPTICAL RECEIVER 19

27 LIGHT

29 LIGHT

SECOND OPTICAL RECEIVER 23

SECOND OPTICAL TRANSMITTER 25

21

DATA PROCESSING CIRCUIT

13

SECOND DATA UNIT

# FIG. 2

**FIRST DATA UNIT 31**

DATA PROCESSING CIRCUIT — 35

DATA SOURCE — 49

— 55

MODULATED OPTICAL SOURCE — 37

OPTICAL DETECTOR — 41

69

UNMODULATED OPTICAL SOURCE — 39

61 — LENS

LENS

63 — 

LENS

MODULATED LIGHT 53

REFLECTED LIGHT 59

UNMODULATED LIGHT 51

67 — LENS

LENS — 65

OPTICAL DETECTOR

OPTICAL MODULATOR

45

47

DATA SOURCE — 43

57 — 

DATA PROCESSING CIRCUIT

**SECOND DATA UNIT 33**

# FIG.3

# FIG. 4

SECOND DATA UNIT 33

FIRST DATA UNIT 31B

DATA SOURCE 57

DATA PROCESSING CIRCUIT 43

DATA OUTPUT 47

DATA INPUT 45

93

95

97

RECEIVED DATA

DATA PROCESSING CIRCUIT 83

91

89

81

87

V_CC

85

DATA SOURCE

EP 0 185 749 B1